# EUROPEAN PATENT APPLICATION

(11) **EP 1 980 938 A1**
(43) Date of publication of application: **15.10.2008**
(21) Application number: 08100349.3
(22) Date of filing: 11.01.2008
(51) Int. Cl.: G06F 3/048

(54) **Apparatus and method for interfacing between digital devices**

(30) Priority: 09.04.2007 KR 20070034628
(71) Applicant: Samsung Electronics Co., Ltd., Suwon-si, Gyeonggi-do 442-742 (KR)
(72) Inventor: Han, Kuk-hyun, Suwon-si, Gyeonggi-do (KR)
(74) Representative: Robinson, Ian Michael

(57) **Abstract**

An apparatus and method for interfacing between digital devices. The apparatus for interfacing between two or more digital devices through wired and/or wireless communication includes: a display unit (110) that outputs information regarding communicable digital devices and receives information for specifying digital devices for interfacing and selecting content for communicating based on the displayed information; and a control unit (120) that controls wired and/or wireless communication between the desired digital devices. Accordingly, the user can easily use contents or services that are not stored in a digital device.

## Description

### BACKGROUND

### 1. Technical Field

Apparatuses and methods consistent with the present invention relate to interfacing between digital devices through wired and/or wireless communication.

### 2. Description of the Related Art

There are various types of digital devices such MP3 players, mobile phones, digital cameras, camcorders, digital televisions (DTVs), personal computers (PCs), set top box (STBs), and the like for providing content data or performing services. Such digital devices have a storage space with a predetermined capacity, and the size of the storage space and the amount of content stored in the storage space have been gradually increasing. Thus, it is difficult to store all desired contents in the storage space of the digital devices. In addition, the services that can be provided by the digital devices are limited. Hence, as the amount of the stored content data increases and the functions of the services become diversified, it takes much time to search for the desired contents or services.

### SUMMARY OF THE INVENTION

According to the present invention there is provided an apparatus and method as set forth in the appended claims. Other features of the invention will be apparent from the dependent claims, and the description which follows.

The present invention provides an apparatus and method for interfacing between digital devices, wherein the apparatus is capable of using contents which are not stored in a digital device or not provided by the digital device.

The present invention may also improve the convenience to a user by enabling the user to intuitively use contents or services of digital device devices without description.

According to an aspect of the present invention, there is providedes an apparatus for interfacing between two or more digital devices through wired and/or wireless communication, the apparatus comprising: a display unit which outputs information regarding communicable digital devices and receives information for specifying digital devices desired to interface with each other or contents desired to be communicated based on the information regarding the output digital devices; and a control unit which controls wired and/or wireless communication between the desired digital devices.

The display unit may comprise: an output unit which outputs the information regarding the communicable digital devices in graphic user interface (GUI) form; and a touch sensor unit which senses an input of the user regarding the desired digital devices or contents based on the information regarding the digital devices that is output in GUI form.

The touch sensor unit may sense the input of the user by using a touch screen or a separate tool.

The touch sensor unit may sense an input regarding transmitting and receiving digital devices and an input regarding desired data from among data included in the transmitting digital device, and the control unit may control wired and/or wireless communication of the desired data between the transmitting and receiving digital devices.

The touch sensor unit may sense an input regarding transmitting and receiving digital devices and an input regarding desired services from among services provided by the transmitting digital device, and the control unit may control wired and/or wireless communication of the desired services between the transmitting and receiving digital devices.

The services may represent that the receiving digital device receives contents, which are provided to the transmitting digital device by contents providers, through the transmitting digital device.

The services may represent that the receiving digital device receives contents, which are provided to the transmitting digital device by contents providers, directly from the contents providers.

The touch sensor unit may further include a digital device sensing unit that senses a digital device that is put on the display device, and the output unit may output information regarding a digital device sensed by the digital device sensing unit in GUI form.

The touch sensor unit may sense an input regarding a digital device desired to interface with the digital device sensed by the digital device sensing unit, and the control unit may control wired and/or wireless communication between the desired digital device and the digital device sensed by the digital device sensing unit.

The touch sensor unit may sense an input of the user regarding desired data or services between the desired digital device and the digital device sensed by the digital device sensing unit, and the control unit may control wired and/or wireless communication of the desired data or services between the desired digital device and the digital device sensed by the digital device sensing unit.

The touch sensor unit may sense an input regarding transmitting and receiving digital devices from among the sensed digital devices and an input regarding data or services desired to be communicated with the receiving digital device from among data or services included in the transmitting digital device, when two digital devices are sensed by the digital device sensing unit, and the control unit may control wired and/or wireless communication of the desired data or services between the transmitting and receiving digital devices.

The wired and/or wireless communication may use one of Ethernet, Bluetooth, Zigbee, infrared communication, and wireless local are network (WLAN).

According to another aspect of the present invention, there is provided a method of interfacing between two or more digital devices through wired and/or wireless communication, the method comprising: outputting information regarding communicable digital devices; receiving information for specifying digital devices desired to interface with each other or contents desired to be communicated based on the information regarding the output digital devices; and controlling wired and/or wireless communication between the desired digital devices.

In the outputting of the information, the information regarding the communicable digital devices may be output in GUI form, and in the receiving of the information, the information for specifying the desired digital device or contents may be received based on the information regarding the digital devices that is output in GUI form.

The receiving of the information may further comprise sensing an input of the user by using a touch screen or a separate tool.

In the receiving of the information, information regarding the transmitting and receiving digital devices and information regarding data desired to be communicated from among the data included in the transmitting digital device may be received from the user, and in the controlling of the wired and/or wireless communication, the wired and/or wireless communication of the desired data may be between the transmitting and receiving digital devices.

In the receiving of the information, information regarding the transmitting and receiving digital devices and information regarding services desired to be communicated from among the services provided by the transmitting digital device may be received from the user, and in the controlling of the wired and/or wireless communication, the wired and/or wireless communication of the desired services may be between the transmitting and receiving digital devices.

In the controlling of the wired and/or wireless communication, the receiving digital device may receive contents, which are provided to the transmitting digital device by contents providers, through the transmitting digital device.

In the controlling of the wired and/or wireless communication, the receiving digital device may receive contents, which are provided to the transmitting digital device by contents providers, directly from the contents providers.

In the sensing of the input, the digital device that is enabled to physically approach the touch screen may be sensed, and the method may further comprise outputting information regarding the sensed digital devices in GUI form, after the sensing of the input.

In the receiving of the information, information for specifying a digital device desired to be interfaced with the sensed digital device from among the communicable digital devices may be received from the user, and in the controlling of the wired and/or wireless communication, the wired and/or wireless communication may be between the desired digital device and the sensed digital device.

In the receiving of the information, information for specifying data or services desired to be communicated from among data or services of the desired digital device and the sensed digital device may be received from the user, and in the controlling of the wired and/or wireless communication, the wired and/or wireless communication of the received data or services between the desired digital device and the sensed digital device may be controlled.

The wired and/or wireless communication may use one of Ethernet, Bluetooth, Zigbee, infrared communication, and WLAN.

According to another aspect of the present invention, there is provided a method of interfacing between two or more digital devices through wired and/or wireless communication, the method comprising: sensing a plurality of digital devices that are enabled to physically approach the touch screen; receiving data or services desired to be communicated from among data or services of the sensed digital devices through the touch screen; and controlling wired and/or wireless communication between the sensed digital devices.

According to another aspect of the present invention, there is provided a computer-readable recording medium having embodied thereon a computer program for executing a method of interfacing between two or more digital devices through wired and/or wireless communication, the method comprising: outputting information regarding communicable digital devices; receiving information for specifying digital devices desired to interface with each other or contents desired to be communicated based on the information regarding the output digital devices; and controlling wired and/or wireless communication between the desired digital devices.

Another aspect of the present invention provides a computer-readable recording medium having embodied thereon a computer program for executing a method of interfacing between two or more digital devices through wired and/or wireless communication, the method comprising: sensing a plurality of digital devices that are enabled to physically approach the touch screen; receiving data or services desired to be communicated from among data or services of the sensed digital devices through the touch screen; and controlling wired and/or wireless communication between the sensed digital devices.

### BRIEF DESCRIPTION OF THE DRAWINGS

The above and other aspects of the present invention will become more apparent by describing in detail exemplary embodiments thereof with reference to the attached drawings, in which:
FIG. 1 is a block diagram illustrating an interface apparatus between digital devices according to an exemplary embodiment of the present invention;
FIG. 2A and 2B illustrate a window of a touch screen of a display unit based on an operation of the interface apparatus, according to an exemplary embodiment of the present invention;
FIG. 3 illustrates a window of a touch screen of the display unit, according to another exemplary embodiment of the present invention;
FIG. 4A and 4B illustrate a window of a touch screen of the display unit based on an operation of an interface apparatus and a digital device put on the touch screen, according to another exemplary embodiment of the present invention;
FIG. 5 illustrates a window of a touch screen of the display unit and a practical digital device, according to another exemplary embodiment of the present invention;
FIG. 6 illustrates a window of a touch screen of the display unit based on an operation of an interface apparatus and a digital device put on the touch screen, according to another exemplary embodiment of the present invention;
FIG. 7 illustrates a window of a touch screen and a practical digital device, according to another exemplary embodiment of the present invention;
FIG. 8 is a flowchart of a method of interfacing between digital devices according to an exemplary embodiment of the present invention;
FIG. 9 is a flowchart of a method of interfacing between digital devices according to another exemplary embodiment of the present invention; and
FIG. 10 is a flowchart of a method of interfacing between digital devices according to another exemplary embodiment of the present invention.

### DETAILED DESCRIPTION OF EXEMPLARY EMBODIMENTS OF THE INVENTION

Hereinafter, the present invention will be described in detail by explaining exemplary embodiments of the invention with reference to the attached drawings.

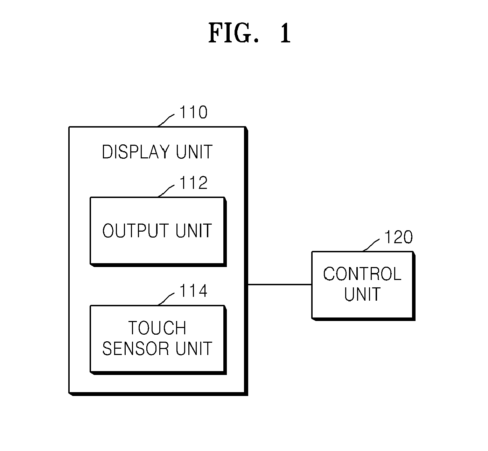

FIG. 1 is a block diagram illustrating an interface apparatus between digital devices according to an exemplary embodiment of the invention.

Referring to FIG. 1, the interface apparatus between digital devices according to an exemplary embodiment of the invention includes a display unit 110 that includes an output unit 112 and a touch sensor unit 114, and a control unit 120.

The display unit 110 may be constructed with, for example, a liquid crystal display (LCD), organic light-emitting diode (OLED), plasma display panel (PDP), cathode ray tube (CRT), or a projection device. The display unit 110 may also be constructed with the output unit 112 that outputs information and displays information to a user on a display. Further, the display unit 110 may be constructed with the touch sensor unit 114 through which input is received from a user through a contact of the display by the user. First, the output unit 112 shows information regarding communicable digital devices to the user. The communicable digital devices are digital devices to which data can be transmitted through the same router. For example, when the user desires to power on the interface apparatus so as to interface with digital devices or to see the communicable digital devices, the output unit 112 displays the information regarding the communicable digital devices to the user in a graphic user interface (GUI) form, for the convenience of the user, as text or icons.

The output unit 112 may also output and display a content data list stored in each of the digital devices or a service list provided by each digital device to the user.

The touch sensor unit 114 senses an input of the user regarding the digital devices that are desired to interface with each other based on the information regarding the digital devices that are output in GUI form. The user selects a digital device to which it is desired to transmit data or services and a digital device that is desired to receive data or services, and specifies the data or services in the digital device that are desired to be transmitted through the touch sensor unit 114.

For example, the user checks that the communicable devices are a digital television (DTV), a mobile phone, an audio player, and an MP3 player. Then, the user can select the mobile phone and the DTV, respectively, as transmitting and receiving digital devices on the display unit 110, such as a touch screen, by respectively touching an icon representing the mobile phone and an icon representing the DTV. The touch sensor unit 114 senses the input of the user and recognizes the transmitting and receiving digital devices from among the communicable digital devices. In addition, the user can select data or services desired to be transmitted to the DTV from among content data stored in the mobile phone selected as the transmitting digital device or services provided by the mobile phone, and such selection of the user is sensed by the touch sensor unit 114 of the display unit 110.

The control unit 120 controls wired and/or wireless communication between the selected digital devices, recognizes communicable data and services by searching data or services included in the transmitting and receiving digital devices sensed by the touch sensor unit 114 and controls the wired and/or wireless communication so that the data or services are transmitted to the receiving digital devices.

In the aforementioned example, the control unit 120 recognizes data or services that are executable through the DTV from among the data stored in the mobile phone or services provided by the mobile phone. For example, video files, photograph files, audio files, and the like, that are stored in the mobile phone can be reproduced through the DTV. In addition, it is possible for the DTV to receive data, which can be received by the mobile phone, from a content providers (Internet server), through the mobile phone, or to directly receive the data from the content providers, so as to reproduce the data. However, since the DTV cannot perform a function of making a phone call of the mobile phone, such a function is recognized as a non-communicable service.

The wired and/or wireless communication between digital devices can be performed, for instance, through Ethernet, Bluetooth, zigbee, infrared ray, WLAN, and the like.

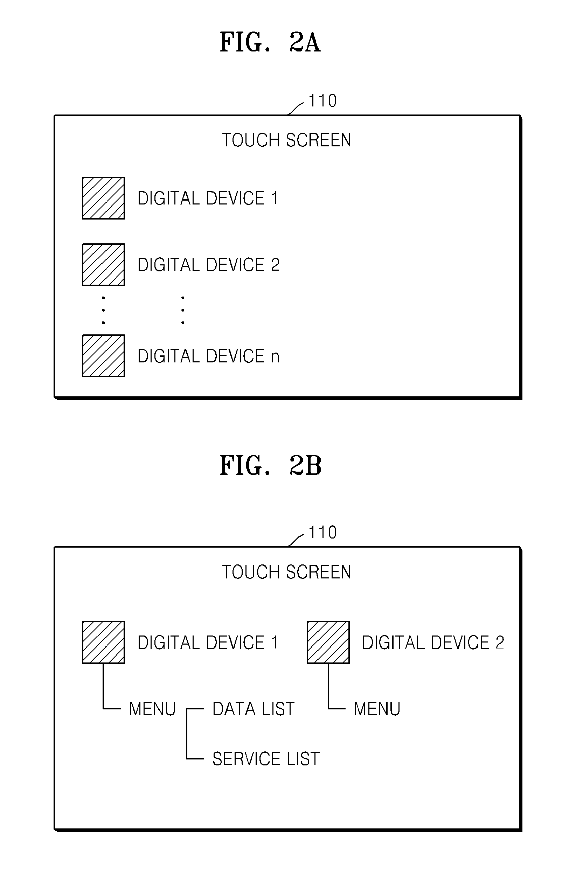

FIG. 2A illustrates a window of a touch screen of the display unit 110 based on an operation of an interface apparatus according to an exemplary embodiment of the present invention.

FIG. 2A, n number of communicable digital devices are displayed on the touch screen in text or image form. However, it is more convenient for the user when the digital devices are displayed on the touch screen with images that are the same as those generally used for practical digital devices.

The window of the touch screen of the display unit 110 of FIG. 2B is obtained when two desired digital devices are selected through a contact of the touch screen. Information regarding a list of data or services can be displayed for each of the two digital devices that were selected, which can be communicated with the transmitting digital device, on the window of the touch screen, from a list of data included in the transmitting digital device or services provided by the transmitting digital device. For example, the user selects desired data from a data list of a digital device 1 that is a transmitting device, copies the data into a digital device 2 that is the receiving digital device, or reproduces the data on the digital device 2. In addition, it is possible to select a desired service from a service list of the digital device 1, wherein the service is mainly provided by a content provider. When the desired service is selected, the digital device 2 may receive the service directly from the content provider or from the digital device 1, which is provided with the service.

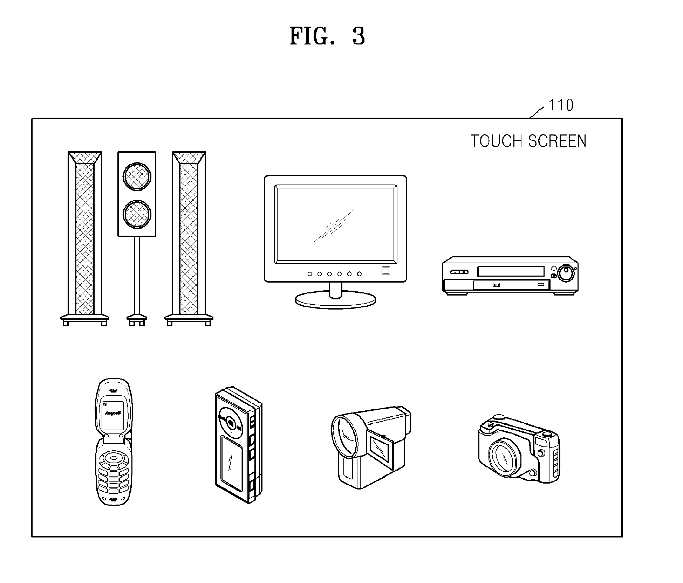

FIG. 3 illustrates a window of a touch screen of the display unit 110, according to another exemplary embodiment of the present invention. On the window of the touch screen of the display unit 110, n number of communicable digital devices are displayed. When the interface apparatus is powered on or when the user inputs a command instructing the communicable digital devices to be displayed, the control unit 120 searches for the communicable digital devices and displays the communicable digital devices on the window of the touch screen of the display unit 110. For the convenience of the user, it is possible to display the communicable digital devices with images that are the same as those generally employed for practical digital devices. The communicable digital devices indicate digital devices to which data can be transmitted through the same router.

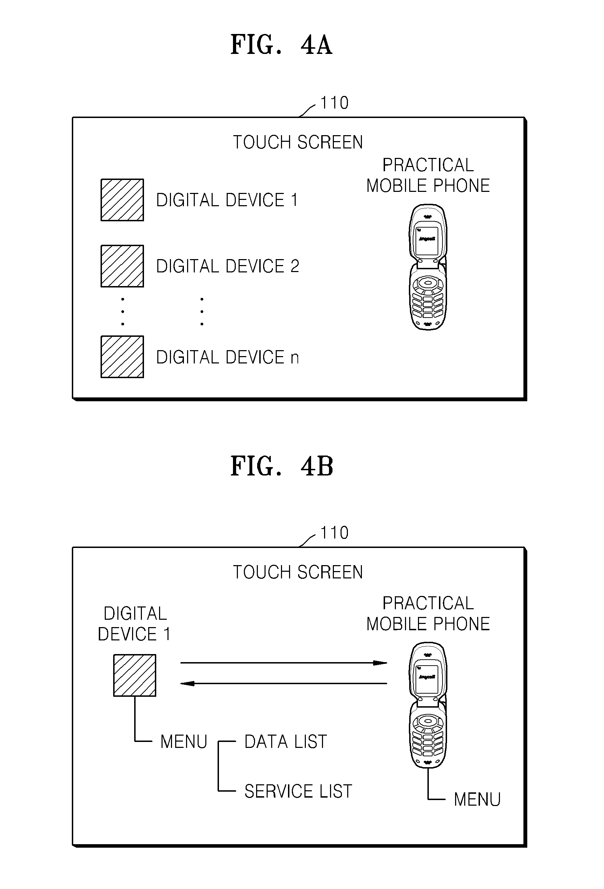

FIGS. 4A and 4B illustrate a window of a touch screen of the display unit 110 based on an operation of an interface apparatus and a digital device placed on the touch screen, according to another exemplary embodiment of the present invention.

In FIG. 4A, n number of communicable digital devices are displayed on the touch screen. The user may select two desired digital devices from among the digital devices displayed on the touch screen as in the exemplary embodiment of FIG. 2. Alternatively, the user may enable a practical digital device by directly touching the practical digital device to the touch screen. Hence, the touch sensor unit 114 senses the practical digital device that is selected by physically touching the practical digital device to the touch screen. For example, when the user places a practical mobile phone on the touch screen, the touch sensor unit 114 senses the practical mobile phone. Thus, the control unit 120 can recognize the type of the practical mobile phone, data included in the practical mobile phone, and services provided by the practical mobile phone. The practical mobile phone can be sensed by the touch sensor unit 114 through various means such as radio frequency identification (RFID), infrared rays, image sensors, lasers, touch sensors, zigbee, Bluetooth, and the like.

If the practical mobile phone placed on the touch screen approaches one of the digital devices displayed on the touch screen, then the control unit 120 controls wired and/or wireless communication between the practical mobile phone and the digital device. Specifically, if the user places the practical mobile phone on an icon representing the digital device 1, then the practical mobile phone starts to interface with the digital device 1. If the user places the practical mobile phone on an icon representing the digital device 2, then the mobile phone interfaces with the digital device 2. In addition, even when the practical mobile phone is not exactly placed on the icon representing the digital device that is to interface with the practical mobile phone, it is possible to set a threshold so that the practical mobile phone starts to interface with the digital device that is to interface with the practical mobile phone when the practical mobile phone approaches the icon of the digital device within a predetermined range.

In addition, the user may select desired digital devices from among the digital devices displayed on the touch screen by using a hand or a pen. If the user selects the desired digital devices, then the output unit 112 outputs the data list and the service list of the digital device that is selected as the transmitting digital device. That is, as shown in FIG. 4B, if the user selects digital device 1 to interface with the practical mobile phone, then the output unit 112 outputs the data list and the service list of the digital device 1 that is selected as the transmitting digital device. As such, the user can select the desired data or services via the touch screen.

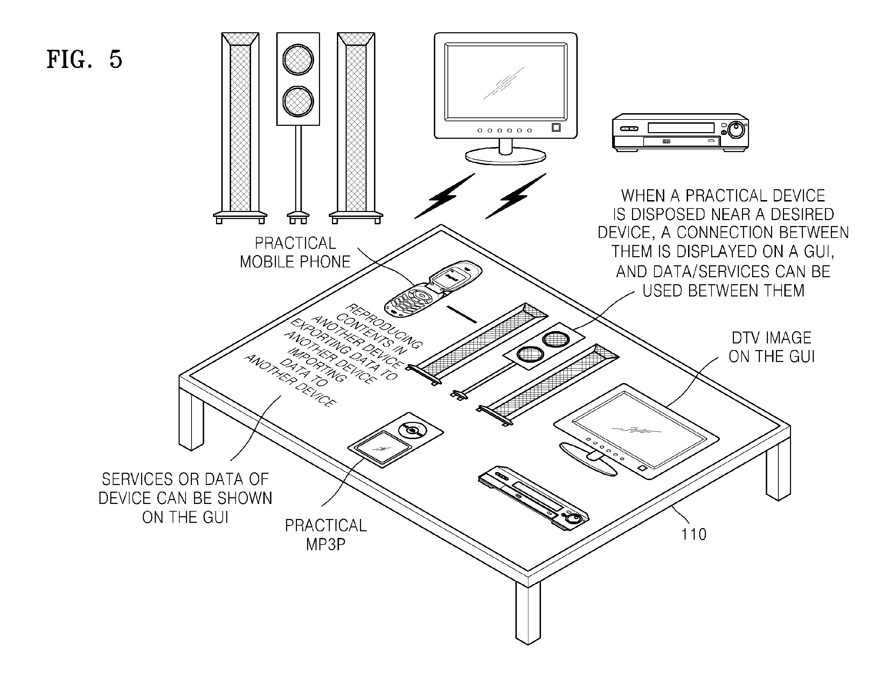

FIG. 5 illustrates a window of a touch screen 110 and digital devices, according to another exemplary embodiment of the present invention.

Speakers, a DTV, a digital video player, and the like, shown in an upper part of FIG. 5, are peripheral devices of the interface apparatus that recognizes communicable digital devices from among the speakers, the DTV, the digital video player, and the like, and outputs the communicable digital devices on the touch screen 110. Accordingly, icons of the speakers, the DTV, and the digital video player are output on the right part of the touch screen 110. If a practical mobile phone or a MP3 player is positioned near an icon of a desired digital device, then a connection between the practical mobile phone or the MP3 player with the desired digital device is displayed on a GUI, and thus, it is possible to communicate data or services between the two digital devices. When the connection is displayed, a menu including functions in terms of reproducing content in another device, exporting data to another device, and importing data from another device is displayed on the touch screen 110. Thus, the user can select one function from the menu. Accordingly, the practical mobile phone can interface with the connected speakers, for example, as shown in FIG. 5.

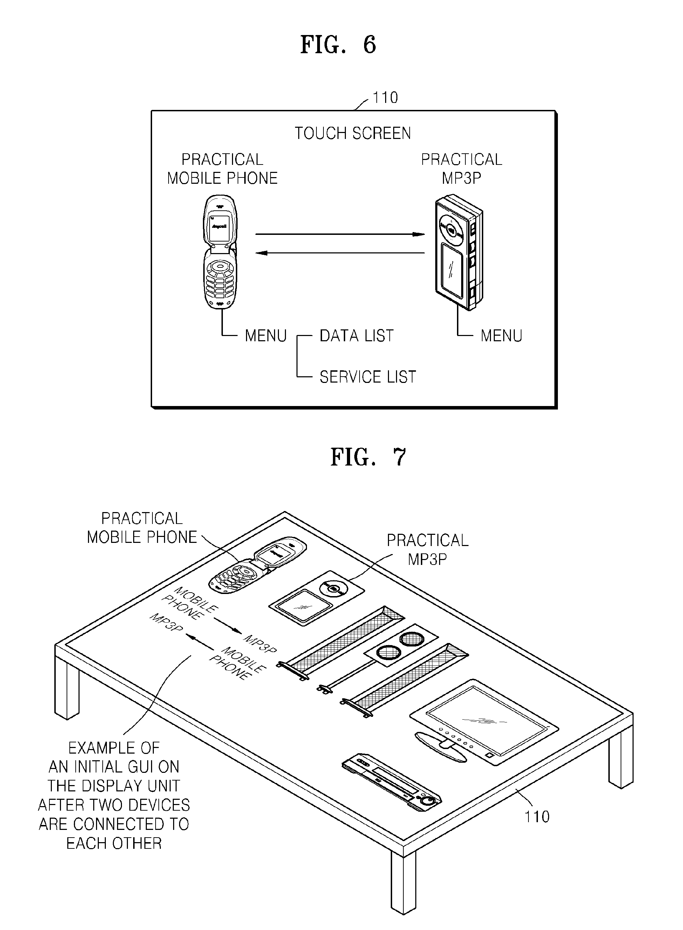

FIG. 6 illustrates a window of a touch screen 110 based on an operation of an interface apparatus and a digital device displayed on the touch screen, according to another exemplary embodiment of the present invention.

If the practical mobile phone and the practical MP3 player are displayed close to each other on the touch screen 110 of the interface apparatus, then the two devices are displayed connected to each other. If the connection of the two devices is displayed, then the user determines transmitting and receiving digital devices by correspondingly selecting between the mobile phone and the MP3 player, for example, the mobile phone -> the MP3 player or the MP3 player -> the mobile phone. Then, the user can perform desired tasks by directly selecting desired data or services on the GUI. If the touch screen 110 comprises a table, for instance, then the user can select the data or services by using a hand or a tool. For example, the user can select at least one desired music file from among music files included in the practical mobile phone to reproduce the music file on the practical MP3 player or to copy the music file into the practical MP3 player.

FIG. 7 illustrates a window of a touch screen 110 and a practical digital device, according to another exemplary embodiment of the present invention.

The icons of the communicable digital devices are displayed on the right part of the touch screen 110. The user may enable one of the displayed digital devices to interface with a practical digital device. In addition, it is possible to enable practical digital devices to touch the touch screen and thus, interface with the touched digital devices.

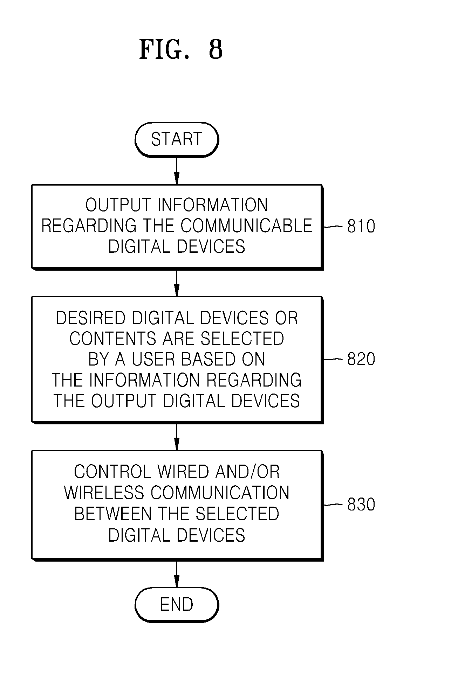

FIG. 8 is a flowchart of a method of interfacing between digital devices according to an exemplary embodiment of the present invention.

In operation 810, information regarding the communicable digital devices is output on a touch screen. A list of the interfacable digital devices is provided to the user on the touch screen. The interfacable digital devices indicate digital devices to which data can be transmitted through the same router. Information regarding the digital devices is output as text or images in GUI form.

In operation 820, desired digital devices or contents are selected by the user based on the information regarding the output digital devices. The user selects the desired digital devices through the touch screen and selects desired data or services from content data stored in the selected digital device and services provided by the selected digital device.

In operation 830, wired and/or wireless communication between the selected digital devices is controlled. The user controls the wired and/or wireless communication so that the data selected by the user in the transmitting digital device is copied into the receiving digital device or reproduced by the receiving digital device.

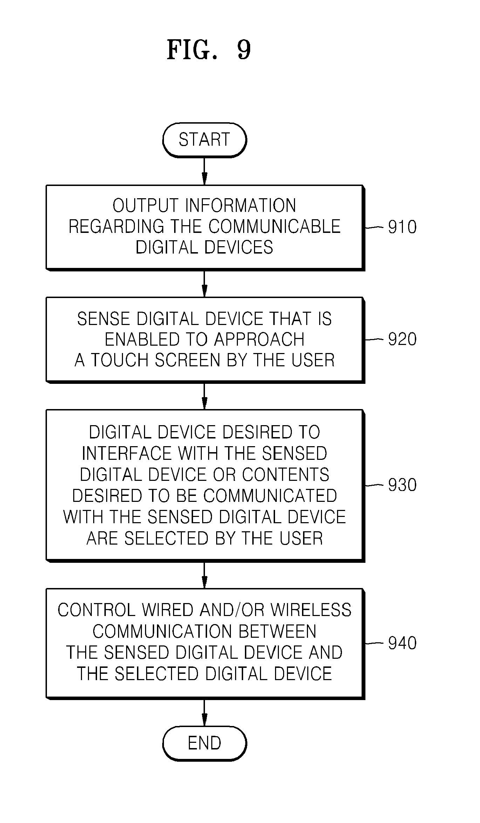

FIG. 9 is a flowchart of a method of interfacing between digital devices according to another exemplary embodiment of the present invention.

In operation 910, information regarding communicable digital devices is output on a touch screen. In operation 910, information regarding a list of the interfacable digital devices is provided to the user on the touch screen.

In operation 920, a digital device that is enabled by the user to physically approach the touch screen is sensed. When the user puts a practical digital device, that is desired to communicate data or services, on the touch screen within a predetermined range, the touch sensor unit 114 senses the type of the practical digital device.

In operation 930, a digital device that is desired to interface with the sensed digital device, or contents that are desired to be communicated with the sensed digital device, are selected by the user. The user can select the digital device that is desired to interface with the sensed digital device from the communicable digital devices output in operation 910. The user can select the desired digital device by enabling the practical digital device to approach one of the digital devices that are output on the touch screen. The touch sensor unit 114 can recognize which digital device is desired to interface with the sensed digital device by sensing the location of the practical digital device on the touch screen. In addition, it is possible for the user to select the desired digital device on the touch screen by using the hand or a tool. In operation 940, wired and/or wireless communication between the sensed digital device and the selected digital device is controlled.

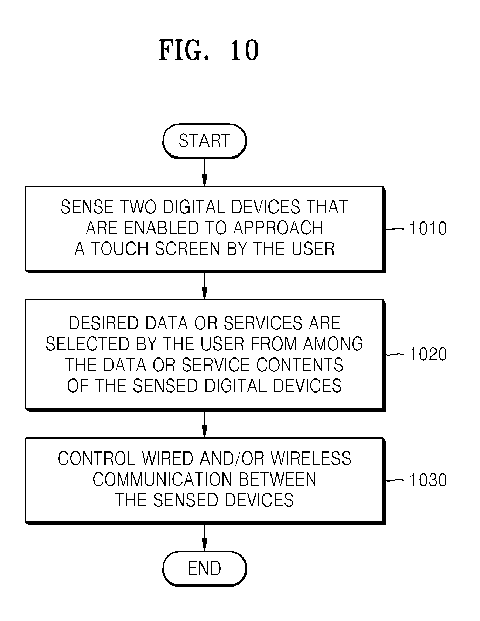

FIG. 10 is a flowchart of a method of interfacing between digital devices according to another exemplary embodiment of the present invention.

In operation 1010, two digital devices that are enabled to physically approach the touch screen by the user are sensed. The touch screen senses the types and contents of the two digital devices.

In operation 1020, desired data or services are selected by the user from among the data or service contents of the sensed digital devices. The user determines a transmitting digital device and a receiving digital device from among the two digital devices on the touch screen. The user is provided with information regarding data or services included in the transmitting digital device through the touch screen, and the user can select data or services desired to be transmitted to the receiving device.

In operation 1030, wired and/or wireless communication between the sensed devices is controlled. The user controls the wired and/or wireless communication so that the data or services selected by the user are copied from the transmitting digital device to the receiving digital device, and then are reproduced, or executed by the receiving digital device.

As described above, an apparatus and a method for interfacing between devices are provided that enable contents that are not stored in the digital device or services that are not provided by the digital device to be used.

In addition, the user can intuitively use contents or services of devices. Accordingly, it is possible to improve the convenience of the user.

The present invention can be applied to combinations such as practical device - practical device, device on the GUI - device on the GUI, practical device - device on the GUI, and the like. The operation mechanism is the same for the various combinations, and it is possible to control contents in the same manner.

The exemplary embodiments of the present invention can be written as computer programs and can be implemented in general-use digital computers that execute the programs using a computer readable recording medium.

Examples of such computer readable recording mediums include magnetic storage media (e.g., read only memory (ROM), floppy disks, hard disks, etc.), and optical recording media (e.g., CD-ROMs, or digital versatile discs (DVDs)).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for interfacing between digital devices, the apparatus comprising:
a display unit (110) which displays information regarding communicable digital devices, and receives information for at least one of specifying digital devices for interfacing and selecting content for communicating, based on the displayed information; and
a control unit (120) which controls communication between the specified digital devices.

2. The apparatus of claim 1, wherein the display unit (110) comprises:
an output unit (112) which outputs the information regarding the communicable digital devices in graphic user interface (GUI) form; and
a touch sensor unit (114) which senses at least one of an input of a user regarding the specified digital devices and an input regarding the selected content, based on the information regarding the digital devices that is output in GUI form.

3. The apparatus of claim 2, wherein the touch sensor unit (114) senses the input of the user by using at least one of a touch screen and a separate tool.

4. The apparatus of claim 2, wherein the touch sensor unit (114) senses an input regarding a transmitting digital device and a receiving digital device,
wherein the touch sensor unit (114) senses an input regarding specified data, from among data included in the transmitting digital device, and
wherein the control unit (120) controls communication of the specified data between the transmitting digital device and the receiving digital device.

5. The apparatus of claim 2,
wherein the touch sensor unit (114) senses an input regarding a transmitting digital device and a receiving digital device,
wherein the touch sensor unit (114) senses an input regarding a specified service from among services provided by the transmitting digital device, and
wherein the control unit (120) controls communication of the specified service between the transmitting digital device and the receiving digital device.

6. The apparatus of claim 5, wherein the specified service is communicated between the transmitting digital device and the receiving digital device such that the receiving digital device receives content, via the transmitting digital device, which is provided to the transmitting digital device by a content provider.

7. The apparatus of claim 5, wherein the specified service is communicated between the transmitting digital device and the receiving digital device such that the receiving digital device receives content, which is provided to the transmitting digital device by a content providers, directly from the content provider.

8. The apparatus of claim 2, wherein the touch sensor unit (114) comprises a digital device sensing unit which senses a digital device that is placed near the display device.

9. The apparatus of claim 8, wherein the output unit (112) outputs information regarding a digital device sensed by the digital device sensing unit in GUI form.

10. The apparatus of claim 9, wherein the touch sensor unit (114) senses an input regarding a second digital device to be interfaced with the digital device sensed by the digital device sensing unit, and
wherein the control unit (120) controls communication between the second digital device and the digital device sensed by the digital device sensing unit.

11. The apparatus of claim 10, wherein the touch sensor unit (114) senses an input regarding at least one of data and services that can be provided between the second digital device and the digital device sensed by the digital device sensing unit, and
wherein the control unit (120) controls communication of the at least one of data and services between the second digital device and the digital device sensed by the digital device sensing unit.

12. The apparatus of claim 8, wherein, if at least two digital devices are sensed by the digital device sensing unit, the touch sensor unit (114) senses an input regarding a transmitting digital device and a receiving digital device from among the sensed digital devices, and the touch sensor unit (114) senses an input regarding at least one of data and services to be communicated with the receiving digital device from among data or services included in the transmitting digital device, and
wherein the control unit (120) controls communication of the data or services between the transmitting digital device and the receiving digital device.

13. The apparatus of any preceding claim, wherein the communication between the specified digital devices comprises at least one of Ethernet communication, Bluetooth communication, Zigbee communication, infrared communication, and wireless local area network communication.

14. The apparatus of any preceding claim, wherein the display unit (110) has a table shape.

15. A method of interfacing between digital devices, the method comprising:
outputting information regarding communicable digital devices;
receiving information for specifying at least one of digital devices for interfacing and content to be communicated, using the information regarding the communicable digital devices; and
controlling communication between the digital devices.

16. The method of claim 15, wherein in the outputting of the information, the information regarding the communicable digital devices is output in GUI (graphic user interface) form, and
wherein in the receiving of the information, the information for specifying the at least one of digital devices and content is received based on using the information regarding the communicable digital devices that is output in GUI form.

17. The method of claim 16, wherein the receiving of the information further comprises sensing an input of a user through at least one of a touch screen and a separate tool.

18. The method of claim 17, wherein in the receiving of the information, information regarding a transmitting digital device and a receiving digital device and information regarding data to be communicated, from among data included in the transmitting digital device, are received from the user, and
wherein in the controlling of the communication, the communication of the data is between the transmitting digital device and the receiving digital device.

19. The method of claim 17, wherein in the receiving of the information, information regarding a transmitting digital device and a receiving digital device and information regarding services to be communicated, from among services provided by the transmitting digital device, are received from the user, and
wherein in the controlling of the communication, the communication of the services is between the transmitting digital device and the receiving digital device.

20. The method of claim 19, wherein in the controlling of the communication, the receiving digital device receives, via the transmitting device, content, which is provided to the transmitting digital device by a content provider.

21. The method of claim 19, wherein in the controlling of the communication, the receiving digital device receives content, which is provided to the transmitting digital device by a content provider, directly from the content provider.

22. The method of claim 17, wherein in the sensing of the input of the user, a digital device that is near the touch screen is sensed.

23. The method of claim 22, further comprising outputting information regarding the sensed digital device in GUI form, after the sensing of the input of the user.

24. The method of claim 23,
wherein in the receiving of the information, information for specifying a second digital device, from among the communicable digital devices, to be interfaced with the sensed digital device, is received from the user, and
wherein in the controlling of the communication, the communication is between the second digital device and the sensed digital device.

25. The method of claim 24, wherein in the receiving of the information, information for specifying at least one of data and services to be communicated, from among data or services of the second digital device, and for specifying the sensed digital device is received from the user, and
wherein in the controlling of the communication, the communication of the received at least one of data and services between the second digital device and the sensed digital device are controlled.

26. The method of claim 16, wherein the communication comprises at least one of Ethernet communication, Bluetooth communication, Zigbee communication, infrared communication, and wireless local area network communication.

27. A method of interfacing between digital devices, the method comprising:
sensing a plurality of digital devices that are near a touch screen;
receiving at least one of data and services to be communicated, from among at least one of data and services of the sensed digital devices, via the touch screen; and
controlling communication between the sensed digital devices.

28. A computer-readable recording medium having embodied thereon a computer program for executing a method of interfacing between digital devices, the method comprising:
outputting information regarding communicable digital devices;
receiving information for specifying at least one of digital devices for interfacing and content ,to be communicated based onusing the information regarding the communicable digital devices; and
controlling communication between the digital devices.

29. A computer-readable recording medium having embodied thereon a computer program for executing a method of interfacing digital devices, the method comprising:
sensing a plurality of digital devices that are near a touch screen;
receiving at least one of data and services , to be communicated, from among at least one of data and services of the sensed digital devices, via the touch screen; and
controlling communication between the sensed digital devices.
